# EUROPEAN PATENT SPECIFICATION

(11) **EP 4 661 270 B1**
(45) Date of publication and mention of the grant of the patent: **22.07.2026**
(21) Application number: 24180194.3
(22) Date of filing: 05.06.2024
(51) Int. Cl.: H02M 3/00, H02M 3/335

(54) **DC/DC CONVERTER CIRCUIT**
GLEICHSTROM-GLEICHSTROM-WANDLERSCHALTUNG
CIRCUIT CONVERTISSEUR CONTINU-CONTINU

(43) Date of publication of application: 10.12.2025
(73) Proprietor: Infineon Technologies Austria AG, 9500 Villach (AT)
(72) Inventor: SCHÄFER, Jannik, 8820 Wädenswil (CH); WEIHE, Sven Elgin, 8032 Zürich (CH); KOLAR, Johann Walter, 8044 Zürich (CH); KASPER, Matthias Joachim, 9500 Villach (AT)
(74) Representative: 2SPL Patentanwälte PartG mbB

(56) References cited:
- WO-A1-2015/197031
- CN-A- 116 846 214
- US-A1- 2023 378 795
- US-B1- 10 938 309
- US-B2- 11 677 326
- US-B2- 9 960 687

## Description

### Field

The present disclosure generally relates to DC/DC converters, and, more particularly, to step-up DC/DC converters with one or more rectifier circuits on a primary side and a resonant tank circuit on a secondary side.

### Background

A DC/DC converter is an electronic circuit that converts a source of direct current (DC) from one voltage level to another. It is a type of power converter and may used in various applications where different voltage levels are required for different components. A purpose of a DC/DC converter may be to match an energy supply to energy demands of different devices or systems.

An LLC resonant converter is a type of DC/DC converter that uses a resonant tank circuit with an inductor-capacitor-inductor (LLC) configuration to convert a DC input voltage to a DC output voltage at a different level, with high efficiency and good electromagnetic compatibility. An LLC converter is a resonant inverter with three reactive elements where a DC input voltage may be turned into a square wave by a switch network arranged as either a half- or full-bridge to feed a resonant LLC tank that may filter out harmonics providing a sinusoidal like voltage and current waveform. This in turn may feed a transformer that provides voltage scaling and primary-secondary isolation. The converter power flow may be controlled by modulating the square wave frequency with respect to the tank circuit's resonance. In an LLC resonant converter, semiconductor switches may be soft-switching, or zero-voltage switching (ZVS), at turn-on for the primary MOSFETs and zero-current switching (ZCS) at both turn-on and turn-off for the rectifiers in the secondary; resulting in lower losses and thereby a higher efficiency.

An LLC resonant converter may be used with one or more center-tapped synchronous rectifiers on the secondary side. The use of a center-tapped transformer with synchronous rectifiers may allow for better utilization of the transformer and more efficient rectification compared to diode-based solutions. A secondary winding of the transformer in an LLC resonant converter can be center-tapped, effectively splitting the winding into two essentially equal halves. This configuration may provide two alternating voltages which are 180 degrees out of phase with each other. Synchronous rectifiers may use MOSFETs or other types of transistors instead of diodes for the rectification process. These transistors may be controlled to turn on and off synchronously with the AC waveform they are rectifying.

In applications with a high step-down ratio and wide input and/or output voltage range, a series (LLC) resonant converter with matrix transformer (i.e., series connection of primary side terminals and parallel connection of rectification stages) has proven to have a high efficiency and a high power density, as it allows to operate at high switching frequencies in soft-switching (ZVS), leveraging the benefits of GaN HEMTs (Gallium Nitride High-Electron-Mobility Transistors). The matrix transformer may allow to utilize planar (i.e. PCB-integrated) magnetics by distributing a high output current among several synchronous rectifier stages. For high output current applications, center-tapped rectifiers may be a preferred choice for the secondary side, as they have the lowest number of semiconductor devices in the conduction path.

In forward power flow, control of the rectifier stages may be straightforward as they act as synchronous rectifiers, where the body diode conduction of the switching MOSFETs can be detected and used as a trigger signal to turn on the devices. This may be perfectly suited for applications with only unidirectional power flow requirement, like data centers. In applications, however, where also a bidirectional power flow is required, such as in DC/DC converters in cars, where a high-voltage (HV) battery is connected to low-voltage (LV), this is not possible with the control concept for forward power flow.

US 11,677,326 B2 discloses an LLC resonant converter and a method for controlling it to ensure stable output voltage, particularly under light-load or no-load conditions. The control strategy involves adjusting the switching frequency of primary-side switches. When this frequency reaches a threshold, it is fixed, and a phase shift is introduced and varied between specific primary switch control signals to regulate the output voltage. The converter as described is unidirectional, focusing on forward power flow from an input to an output.

WO 2015/197031 A1 discloses a unidirectional LLC resonant converter circuit. Its main teaching focuses on improving the reliability of the secondary synchronous rectifier module. This is achieved by incorporating a "reverse current suppression module" designed to prevent reverse recovery current signals during the synchronous rectification process. The overall system aims to efficiently convert an input DC voltage to an output DC voltage, with an emphasis on optimizing the performance of the synchronous rectification stage during this forward power conversion.

US 9,960,687 B2 describes a bidirectional DC/DC converter for transferring energy between an energy storage device and a DC bus. It features a first bridge circuit on the low-voltage (energy storage) side coupled to a resonant circuit, and a transformer whose primary is coupled to this resonant circuit and whose secondary has a center tap connected to the energy storage device. A second bridge circuit is on the high-voltage (DC bus) side. The system allows for buck or boost operations in both power flow directions, with control strategies involving PWM or variable frequency operation of the bridges.

US 10,938,309 B1 describes a voltage converter, typically a buck converter, that can be controlled to operate in a reverse boost mode. The core teaching is a control system that generates pulse-width modulated signals for switches on the low-voltage side. These signals are based on detected characteristics of current through an inductor, such as minimum and maximum current peaks. This control method allows the converter to manage power flow from the low-voltage side to the high-voltage side, for example, to discharge an output capacitor bank.

CN 116846214 A discloses a reverse gain control method for a resonant converter, such as a CLLC type, used in applications like vehicle chargers. When operating in reverse (e.g., battery discharging to grid), the method involves obtaining the primary H-bridge's reverse output voltage to determine a target operating period. If this period indicates a fixed-frequency mode, the primary H-bridge is controlled into a short-circuit state. This action adjusts the reverse output gain, aiming to enhance the converter's boost capability during reverse power flow.

Thus, there may be a demand for a control concept for reverse power flow, i.e., from LV to HV using an LLC resonant converter.

### Summary

This demand is addressed by the appended claims.

According to a first aspect, the present disclosure provides a DC/DC converter circuit. The DC/DC converter circuit comprises a primary port for providing a primary voltage and a secondary port for providing a secondary voltage. A primary side of the DC/DC converter circuit comprises at least one rectifier circuit coupled to the primary port. The rectifier circuit comprises a first primary winding coupled to a first terminal of the primary port via a first switch and coupled to a second terminal of the primary port via a tap. The rectifier circuit comprises a second primary winding coupled to the first terminal of the primary port via a second switch and coupled to the second terminal of the primary port via the tap between the first and the second winding. A secondary side of the DC/DC converter comprises a bridge circuit of switches and a resonant tank circuit coupled to the secondary port via the bridge circuit. The resonant tank circuit comprises a series connection of a capacitor and at least one secondary winding. The primary windings and the secondary winding form a transformer. The DC/DC converter circuit further comprises a control circuit configured to control switches of the primary and the secondary side. The control circuit is configured to control the switches of the bridge circuit to cause a first and a second terminal of the resonant tank circuit being short-circuited for a (adjustable) time. In particular, the control circuit may be configured to control the switches of the bridge circuit to cause the first and the second terminal of the resonant tank circuit being periodically short-circuited for the (adjustable) time.

Short-circuiting the terminals of the secondary resonant tank circuit for the (adjustable) time may result in an increase in current flowing through the resonant tank circuit DC/DC converter circuit (reverse power flow). In this way, power may be transferred from the primary side to the secondary side. A rise time of the current flowing through the resonant tank circuit, and therefore the transferred power, may be controlled via a variable or adjustable simultaneous on-time of the switches of the bridge circuit. The proposed control concept may also ensure ZVS operation of the primary side.

In some embodiments, the (adjustable) time (e.g., the simultaneous on-time of the switches) for short-circuiting the first and a second terminal of the resonant tank circuit is less than the on-time of the switches of the bridge circuit. The on-times and/or the simultaneous on-time of the switches may be controllable by the control circuit. In this way, the transferred power may be controlled.

In some embodiments, the control circuit is configured to cause a phase shift different from 180° (e.g., 150° < phase shift < 210°) between a switch of a first leg (or half) of the bridge circuit and a switch of a second leg (or half) of the bridge circuit. This phase shift may be adjustable. The bridge circuit may have different "legs" or "paths" through which electrical current can flow. The term "leg" in this context may refer to a section of the bridge circuit between two nodes. A full-bridge circuit has four legs, each containing a switch, which can be a transistor, MOSFET, IGBT, or even a diode, depending on the application. The bridge circuit may be divided into two halves, each with two legs. This may allow the circuit to control a polarity of a voltage across a load by activating switches in different legs. A half-bridge circuit has two legs.

In some embodiments, the secondary side bridge circuit comprises a first switch (of a first leg) coupled between a first terminal of the secondary port and the first terminal of the resonant tank circuit, a second switch (of a second leg) coupled between the first terminal of the resonant tank circuit and a second terminal of the secondary port. The first and the second switch may form a first half of the bridge circuit. A third switch (of a third leg) is coupled between the first terminal of the secondary port and a second terminal of the resonant tank circuit, and a fourth switch (of a fourth leg) is coupled between the second terminal of the resonant tank circuit and the second terminal of the secondary port. The third and the fourth switch may form a second half of the bridge circuit. Thus, the bridge circuit may be a full bridge circuit. The control circuit may be configured to control the switches of the bridge circuit to cause respective on-times of the second and fourth switch and/or the first and third switch to overlap for the predefined time (simultaneous on-time).

In some embodiments, the control circuit is configured to operate the second and fourth switch and/or the first and third switch of the bridge circuit with a phase shift larger than 0° and less than 180° or larger than 180° and less than 360°. This means that switching instances between "on" and "off" of these switches are offset by a specified phase angle larger than 0° and less than 180° or larger than 180° and less than 360°. This phase difference may control how the power is delivered to the secondary port.

In some embodiments, the control circuit is configured to vary the phase shift (e.g., the simultaneous on-time of the switches) between a switch of a first leg or half of the bridge circuit and a switch of a second leg or half of the bridge circuit.

The skilled person having benefit from the present disclosure will appreciate that the full-bridge of (one-directional) switches may be replaced by a half-bridge of switches together with a bidirectional switch. A half-bridge configuration generally consists of two switches. When these switches are used with a bidirectional switch, they may replace a full-bridge in applications where bidirectional current flow is required but where independent control of the load polarity is less critical. A bidirectional switch can be made using a pair of transistors (like MOSFETs) arranged back-to-back, where each transistor can block voltage in one direction. This arrangement allows current to flow in both directions, depending on which transistor is activated.

In some embodiments, the control circuit is configured to operate the first switch and the second switch of the primary side rectifier circuit with a phase shift of 180°. When the first switch and the second switch of the rectifier circuit are operated with a phase shift of 180°, it indicates that the switches are operated in a complementary fashion. Essentially, when one switch is on, the other is off, and vice versa. Due to the 180° phase shift between the two switches the circuit can alternate the connection of the primary port.

In some embodiments, the first primary winding and the second primary winding may form a tapped primary winding. In case of a center-tapped primary winding, a number of turns of the first primary winding and a number of turns of the second primary winding of the rectifier circuit are essentially equal.

In some embodiments, the rectifier circuit is a center-tapped synchronous rectifier circuit. A center-tapped synchronous rectifier circuit is a type of power conversion circuit commonly used to convert alternating current (AC) into direct current (DC) with improved efficiency and performance compared to diode-based rectifiers. This setup may use a center-tapped primary winding or transformer and a pair of switches, often MOSFETs or IGBTs (Insulated Gate Bipolar Transistors), which may be controlled to provide synchronous rectification.

In some embodiments, the rectifier circuit comprises a first capacitor coupled between the first switch and the tap, and a second capacitor coupled between the second switch and the tap of the primary winding. In this setup, one capacitor is connected between the drain (or collector) of the first switch (e.g., a MOSFET or IGBT) and the (center) tap of the transformer, and the other capacitor is similarly connected between the drain (or collector) of the second switch and the (center) tap. This configuration places each capacitor across each half of the transformer's winding (the first and second primary winding). The capacitors may serve to smooth out DC output by filtering out any AC components (ripple) present after rectification.

In some embodiments, a number of turns of the secondary winding is larger than a number of turns of each of the primary windings. When the number of turns in the secondary winding of a transformer is larger than the number of turns in the primary winding, it means that the transformer is designed to increase the voltage from the primary to the secondary side. This type of transformer is referred to as a step-up transformer.

In some embodiments, the control circuit is configured to vary a switching frequency and/or on-times of the switches of the primary and/or secondary side based on a power to be transferred between the primary and the secondary port. For example, the control circuit may be configured to vary a phase shift between the second and fourth switch (and/or the first and third switch) of the bridge circuit, resulting in a variable short-circuit time of the resonant tank. After the short-circuit time, the resonant-tank behavior may reduce the current in the first or second secondary inductor until zero current detection is triggered resulting in a change of state of the primary and secondary side switches which is interpreted as a variation of the switching frequency.

In some embodiments, the control circuit comprises zero-current detectors for the at least one rectifier circuit and/or the resonant tank circuit to control the respective switches based on zero-current detection. Zero-current switching involves turning on and off switching elements (such as transistors) at the instant when the current through them is zero. By ensuring that the switches operate at zero current, zero-current detectors may help minimize the stress on these components. This reduction in stress may leads to lower losses, reduced heat generation, and enhanced longevity of the switches.

In some embodiments, the primary voltage of the DC/DC converter circuit is lower than the secondary voltage of the DC/DC converter circuit. This means that DC/DC converter may be used as a step-up DC/DC converter between a low-voltage system and a high-voltage system. The skilled person having benefit from the present disclosure will appreciate that the proposed DC/DC converter may also be used as a step-down DC/DC converter between the high-voltage system and the low-voltage system if controlled differently.

In some embodiments, the primary side comprises a plurality of center-tapped synchronous rectifier circuits and the resonant tank circuit of the secondary side comprises a plurality of secondary windings connected in series. Each of the center-tapped synchronous rectifier circuits and the corresponding secondary winding form a respective transformer - leading to a so-called matrix transformer. The control circuit is configured to control (activate) a number of center-tapped synchronous rectifier circuits coupled to the primary port based on an amount of power to be transferred between the primary port and the secondary port. Thus, the more power is to be transferred between the primary port and the secondary port, the more center-tapped synchronous rectifier circuits may be used in parallel.

According to a further aspect, the present disclosure provides a vehicle. The vehicle comprises a high voltage sub-system, a low voltage sub-system, and a DC/DC converter circuit according to any one of the previous embodiments and coupled between the low voltage sub-system coupled to the primary port and the high voltage sub-system coupled to the secondary port. The DC/DC converter circuit can be used to transfer power from the vehicle's low voltage sub-system (e.g., 12V, 24V, 48V, etc.) to the vehicle's high voltage sub-system (e.g., 400V, 800V, etc.).

According to yet a further aspect, the present disclosure provides method of controlling a power transfer from the primary port to the secondary port of a DC/DC converter circuit according to any one of the previous embodiments. The method includes controlling the switches of the bridge circuit to cause a first and a second terminal of the resonant tank circuit being short-circuited for a short-circuit time.

In some embodiments, the short-circuit time (overlapping on-time) is less than an on-time of any one of the switches of the bridge circuit.

### Brief description of the Figures

Some examples of apparatuses and/or methods will be described in the following by way of example only, and with reference to the accompanying figures, in which
- Fig. 1A: shows a circuit diagram of a DC/DC converter circuit with one rectifier circuit activated, according to an embodiment of the present disclosure;
- Fig. 1B: shows a circuit diagram of a DC/DC converter circuit with one rectifier circuit activated, according to another embodiment of the present disclosure;
- Fig. 2: shows set of example waveforms of the primary and secondary side of the DC/DC converter;
- Fig. 3: shows a circuit diagram of a DC/DC converter circuit with a plurality of rectifier circuits activated, according to an embodiment of the present disclosure;
- Fig. 4: shows a circuit diagram of a DC/DC converter circuit with variations of leakage inductances;
- Fig. 5A, B: illustrate simulation results for varying leakage inductances;
- Fig. 6A: illustrates a control loop for the secondary side voltage; and
- Fig. 6B: illustrates control loops to adjust a switching frequency to achieve ZVS.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

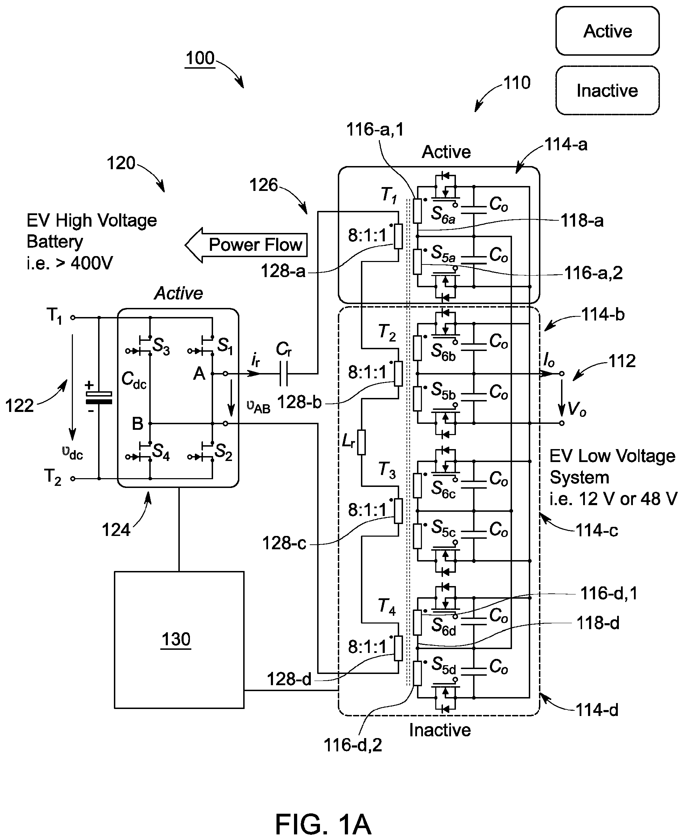

**Fig. 1A** shows a circuit diagram of a DC/DC converter circuit 100 according to an embodiment of the present disclosure. For example, DC/DC converter circuit 100 may be used in an electric or hybrid vehicle.

The illustrated example DC/DC converter circuit 100 comprises a primary side 110 (right) with a primary port 112 for providing a primary voltage V₀ to the DC/DC converter circuit 100. The primary voltage V₀ may be a voltage of a low-voltage system. For example, the primary voltage V₀ may be 12V or 48V. For example, low voltage systems of electric vehicles may operate at 12V, similar to combustion engine vehicles. The low voltage system may be used for the vehicle's basic functionalities including lighting, infotainment systems, dashboard functions, and other standard electronic components. This system may be powered by a standard 12V battery, for example.

The DC/DC converter circuit 100 also comprises secondary side 120 (left) with a secondary port 122 for providing a secondary voltage v_{dc} from the DC/DC converter circuit 100. The secondary voltage v_{dc} may be a voltage of a high-voltage system. In electric vehicles, a high voltage system may power an electric motor and a battery pack that drives the vehicle. These systems generally operate at voltages significantly higher than 12V, e.g., ranging from about 200V to over 800V depending on the vehicle design. The high voltage system may be used for a main drive motor, battery charging, heating systems, and other high-power requirements.

In the illustrated example, the primary side 110 of the DC/DC converter circuit 100 comprises a first rectifier circuit 114-a coupled to the primary port 112. The first rectifier circuit 114-a may be activated (by control circuit 130) for power transfer from the primary side 110 to the secondary side 120. The first rectifier circuit 114-a comprises a first primary winding 116-a,1 coupled to a first terminal of the primary port via a first switch S6a and coupled to a second terminal of the primary port via node or tap 118-a. The first rectifier circuit 114-a comprises a second primary winding 116-a,2 coupled to the first terminal of the primary port 112 via a second switch S5a and coupled to the second terminal of the primary port 112 via the node or tap 118-a between the first and the second primary winding 116-a, 1, 116-a,2 of the first rectifier circuit 114-b. The first primary winding 116-a,1 and the second primary winding 116-a,2 form a tapped primary winding. In case of a center-tapped primary winding, a number of turns of the first primary winding 116-a,1 and a number of turns of the second primary winding 116-a,2 of the first rectifier circuit 114-a are essentially equal. That is, in the illustrated example, the first rectifier circuit 114-a is a center-tapped synchronous rectifier circuit. This setup uses a center-tapped primary winding or transformer and a pair of switches S6a, S5a, e.g. MOSFETs or IGBTs, which may be controlled by control circuit 130 to provide synchronous rectification.

The skilled person having benefit from the present disclosure will appreciate that a design of the rectifier circuit 114-a may not be limited to the illustrated example of a center-tapped synchronous rectifier circuit. Also other rectifier may be employed. In particular, the first primary winding 116-a,1 and the second primary winding 116-a,2 could be (slightly) different in some embodiments.

In the illustrated example of Fig. 1A, the first center-tapped synchronous rectifier circuit 114-a further comprises a first capacitor C₀ coupled between the first switch S6a and the center tap 118-a and a second capacitor C₀ coupled between the second switch S5a and the center tap 118-a of the primary winding 116-a,1, 116-a,2. That is, the first capacitor C₀ is connected between a drain (or collector) of the first switch S6a and the center tap 118-a, and the second capacitor C₀ is similarly connected between the drain (or collector) of the second switch S5a and the center tap 118-a. This example configuration places each capacitor C₀ across each half of the primary winding 116-a, 1, 116-a,2.

In the illustrated example of Fig. 1A, the primary side 110 of the DC/DC converter circuit 100 further comprises a second rectifier circuit 114-b coupled to the primary port 112. The second rectifier circuit 114-b may be deactivated (inactive) for power transfer from the primary side 110 to the secondary side 120. The second rectifier circuit 114-b comprises a first primary winding 116-b,1 coupled to the first terminal of the primary port 112 via a first switch S6b and coupled to the second terminal of the primary port 112 via tap 118-b. The second rectifier circuit 114-b comprises a second primary winding 116-b,2 coupled to the first terminal of the primary port 112 via a second switch S5b and coupled to the second terminal of the primary port 112 via the tap 118-b between the first and the second primary winding 116-b,1, 116-b,2 of the second rectifier circuit 114-b. The first primary winding 116-b,1 and the second primary winding 116-b,2 for form a tapped primary winding. In case of a center-tapped primary winding, a number of turns of the first primary winding 116-b,1 and a number of turns of the second primary winding 116-b,2 of the second rectifier circuit 114-b are essentially equal. That is, in the illustrated example, the second rectifier circuit 114-b also is a center-tapped synchronous rectifier circuit. This setup uses a center-tapped primary winding or transformer and a pair of switches S6b, S5b, which may be controlled by control circuit 130 to provide synchronous rectification.

In the illustrated example, the second center-tapped synchronous rectifier circuit 114-b comprises a first capacitor C₀ coupled between the first switch S6b and the center tap 118-b and a second capacitor C₀ coupled between the second switch S5b and the center tap 118-b of the primary winding 116-b,1, 116-b,2. That is, the first capacitor C₀ is connected between the drain (or collector) of the first switch S6b and the center tap 118-b, and the second capacitor C₀ is similarly connected between the drain (or collector) of the second switch S5b and the center tap 118-b. This configuration places each capacitor C₀ across each half of the primary winding 116-b,1, 116-b,2.

Thus, the first active rectifier circuit 114-a and the second inactive rectifier circuit 114-b are structured essentially identical and coupled to the primary port 112 in parallel. If more power is to be delivered from the primary side 110 to the secondary side 120, control circuit 130 may activate both rectifier circuits 114-a, 114-b by controlling the respective switches S6a, S5a and S6b, S5b.

In the illustrated example of Fig. 1A, the primary side 110 of the DC/DC converter circuit 100 further comprises a third rectifier circuit 114-c and a fourth rectifier circuit 114-d coupled to the primary port 112 in parallel to the first and second rectifier circuits 114-a, 114-b. The third and fourth rectifier circuit 114-c, 114-d are essentially identical to the first and second rectifier circuits 114-a, 114-b. If more power is to be delivered from the primary side 110 to the secondary side 120, control circuit 130 may additionally activate one or both rectifier circuits 114-c, 114-d controlling the respective switches S6c, S5c and S6d, S5d.

The skilled person having benefit from the present disclosure will appreciate that the number of rectifier circuits 114 on the primary side 110 can vary and may be dependent on the amount of power that is to be transferred between the primary and secondary sides 110, 120. Embodiments with only a single rectifier circuit 114 are conceivable.

The secondary side 120 of the DC/DC converter 100 comprises a bridge circuit 124 including switches S1 - S4, and a resonant tank circuit 126 coupled to the secondary port 122 via the bridge circuit 124. The bridge circuit 124 comprises a first series connection of switches S1 and S2 (first half of bridge circuit 124) coupled in parallel to a second series connection of switches S3 and S4 (second half of bridge circuit 124). In the illustrated example, the secondary side bridge circuit 124 comprises a first switch S1 (of a first leg) coupled between a first terminal T1 of the secondary port 122 and a first terminal A of the resonant tank circuit 126. The bridge circuit 124 also comprises a second switch S2 (of a second leg) coupled between the first terminal A of the resonant tank circuit 126 and a second terminal T2 of the secondary port 122. The first switch S1 and the second switch S2 form a first half of the bridge circuit 124. The bridge circuit 124 comprises a third switch S3 (of a third leg) coupled between the first terminal T1 of the secondary port 122 and a second terminal B of the resonant tank circuit 126. The bridge circuit 124 comprises a fourth switch S4 (of a fourth leg) coupled between the second terminal B of the resonant tank circuit 126 and the second terminal T2 of the secondary port 122. The third switch S3 and the fourth switch S4 form a second half of the bridge circuit 124. Thus, in the illustrated example, the bridge circuit 124 is a full bridge circuit. For efficient power transfer from the primary side 110 to the secondary side 120, the control circuit 130 is configured to control the switches S1 - S4 of the bridge circuit 124 in a specific manner which will be described further below.

The resonant tank circuit 126 (Cr, Lr, and Lm) on the secondary side 120 comprises a series connection of a capacitor Cr and one or more secondary windings (inductors) 128-a (128-b, 128-c, 128-d). A number of secondary windings 128 may correspond to a number of center-tapped primary windings 116 (e.g., a number of activated rectifier circuits 114). In the illustrated example of Fig. 1A, a total number of secondary windings 128 is four, including a first secondary winding 128-a, a second secondary winding 128-b, a third secondary winding 128-c, and a fourth secondary winding 128-d. The primary winding(s) 116 and the secondary winding(s) 128 form a transformer (or a matrix-transformer in case of more than one activated rectifier circuits 114).

A number of turns of the secondary winding(s) may be larger than a number of turns of each of the primary windings 116. For example, the number of turns of the secondary winding 128-a may be eight times larger than the number of turns of each of the primary windings 116-a,1 and 116-a,2. The number of turns of the secondary winding 128-b may be eight times larger than the number of turns of each of the primary windings 116-b,1 and 116-b,2, and so on. When the number of turns in the secondary winding of a transformer is larger than the number of turns in the primary winding, it means that the transformer is designed to increase the voltage from the primary side 110 to the secondary side 120. This type of transformer may be referred to as a step-up transformer.

Each parameter of the resonant tank circuit 126 relates to a particular design constraint: the transformer turns ratio, n, may define the operation mode for the converter (buck, boost, or both), Lm restricts the maximum gain, Lr defines the selectivity of the resonant tank circuit 126 and therefore a required switching frequency range for a given gain, and Cr may be used to tune the desired resonant frequency. Each of these parameters, though, also has constraints on its selected value: n may be a multiple of the number of rectifier circuits 114 for symmetry, Lr may be optimized for low occupied volume, Cr may have a withstand voltage that is achievable with commercially available capacitors, and Lm may be large to minimize the magnetizing current and the associated conduction losses.

The DC/DC converter circuit 100 further comprises a control circuit 130 configured to control switches of the primary side 110 and the secondary side 120. For example, control circuit 130 may control a switching frequency fs of the switches. Control circuit 130 may also control phase shifts between the switches of the primary side 110 and the secondary side 120. In particular, control circuit 130 is configured to control the switches S1 - S4 of the bridge circuit 124 in a manner suitable for power transfer from the primary side 110 to the secondary side 120.

With regards to the secondary side 120 of DC/DC converter 100, the control circuit 130 is configured to operate the switches within each half of the bridge circuit 124 with switching frequency fs, 50% duty cycle, and a phase shift of 180°. For example, switch S1 and S2 are operated with frequency fs, 50% duty cycle, and a phase shift of 180°. Likewise, switch S3 and S4 are operated with frequency fs, 50% duty cycle, and a phase shift of 180°. That is, control circuit 130 is configured to operate switch S1 and switch S2 (as well as switch S3 and switch S4) of the bridge circuit 124 with a phase shift of 180°. This implies that switch S1 and switch S2 (as well as switch S3 and switch S4) are being controlled so that one switch of a half is on when the other switch of the half is off, and vice versa. They are never on at the same time. This may prevent any chance of a short circuit between the first terminal T1 and the second terminal T2 of the secondary port 122 that could occur if both switches of a half were on simultaneously, which would connect the two sides of a secondary side power supply directly.

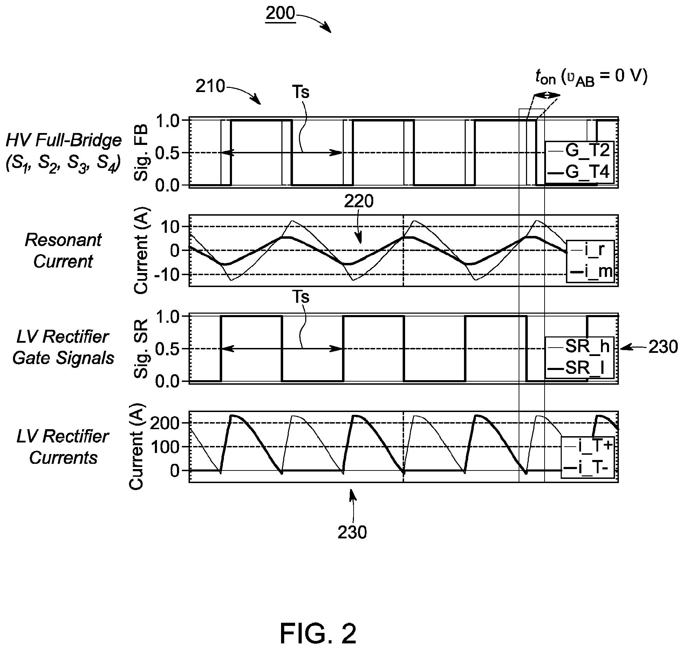

In accordance with the present disclosure, the control circuit 130 is configured to control the switches S1 - S4 of the bridge circuit 124 to cause the first terminal A and the second terminal B of the resonant tank circuit 126 being (periodically) short-circuited for a short-circuit time. This means, that on-times (times during which the switches are closed) of switches S1 and S3 may overlap for the short-circuit time. Likewise, on-times of switches S2 and S4 may overlap for the short-circuit time. This is illustrated in Fig. 2.

Fig. 2 shows a set 200 of waveforms 210, 220 of the secondary side 120 and a set of waveforms 230, 240 of the primary side 120 of DC/DC converter 100.

Graph 210 shows two signals, G_T2 and G_T4, being control signals for switches S2 and S4 of secondary side bridge circuit 124. In particular, control signals G_T2 and G_T4 may be gating signals for transistors T2 and T4 implementing switches S2 and S4. A gating signal for a transistor is a control signal applied to the gate terminal of a field-effect transistor (FET), like a Metal-Oxide-Semiconductor Field-Effect Transistor (MOSFET) or an Insulated-Gate Bipolar Transistor (IGBT), to turn the transistor on or off. When the gating signal is above a certain threshold voltage appropriate for the specific type of transistor, it turns the transistor on, allowing current to flow between the drain and source terminals (for MOSFETs) or collector and emitter terminals (for IGBTs). When the gating signal is below the threshold, it turns the transistor off, preventing current from flowing between the drain and source (or collector and emitter). The illustrated example, gating signals G_T2 and G_T4 are square waves having the same switching frequency (or switching period Ts) but which are out of phase with each other (i.e., phase-shifted), indicating that the switches S2 and S4 they control are being switched on and off in phase-shifted fashion. When G_T2 is high, switch S2 is closed. When G_T2 is low, switch S2 is open. When G_T4 is high, switch S4 is closed. When G_T4 is low, switch S4 is open. Gating signals G_T2 and G_T4 are controlled by control circuit 130.

The control circuit 130 is configured to operate switch S2 and switch S4 (as well as switch S1 and switch S3) of the bridge circuit 124 with the same switching frequency fs (with the same switching period Ts) but with a variable phase shift larger than 180° and less than 360°. This means that switching instances between "on" and "off" of these switches may be offset by a specified phase angle larger than 180° and less than 360°. For example, the phase shift between the control signals of switch S2 and switch S4 (as well as switch S1 and switch S3) may be in a range from 190° to 210°. This phase difference may control how power is delivered to the secondary port 120.

It can be seen in graph 210 of Fig. 2 that due to the phase shift the on-times of switches S2 and S4 (as well as the on-times of switches S1 and S3) overlap for a predefined time tₒₙ. In the illustrated example, in each switching period Ts, the rising edge of control signal G_T2 and the falling edge of control signal G_T4 are temporally separated by tₒₙ. The rising edge of control signal G_T2 is earlier by tₒₙ compared to the falling edge of control signal G_T4 (or vice versa). During this overlapping on-time tₒₙ, the first terminal A and the second terminal B of the resonant tank circuit 126 are short-circuited, i.e., v_{AB} = 0V. The simultaneous on-time tₒₙ of the switches S2 and S4 (or S1 and S3) for short-circuiting the first terminal A and the second terminal B of the resonant tank circuit 126 is less than the individual on-time of the switches S2 and S4 (or S1 and S3) of the bridge circuit 124. In other words, the simultaneous on-time tₒₙ is less then half of the switching period of the switches S2 and S4 (or S1 and S3), i.e. tₒₙ < Ts/2. For example, the simultaneous on-time tₒₙ of the switches S2 and S4 (or S1 and S3) may be in the range from 1% to 20% of the switching period Ts of the switches S2 and S4 (or S1 and S3). The on simultaneous on-time or short-circuit time tₒₙ of the switches S2 and S4 (or S1 and S3) may be controllable by the control circuit 130. In this way, the transferred power may be controlled.

Short-circuiting the terminals A, B of the secondary resonant tank circuit 126 may result in an increase in resonant current iᵣ flowing through the resonant tank circuit 126. This is shown in graph 220 of Fig. 2. In this way, power may be transferred from the primary side 110 to the secondary side 120. A rise time of the resonant current iᵣ flowing through the resonant tank circuit 126, and therefore the transferred power, may be controlled via the variable simultaneous on-time tₒₙ of the switches S2 and S4 and/or S1 and S3 of the bridge circuit 124.

The second graph 220 of Fig. 2 shows two waveforms representing currents, labeled iᵣ and iₘ. Resonant current iᵣ is the current through resonant tank circuit 126. Magnetizing current iₘ is the current through the magnetizing inductance Lₘ. It can be seen that the resonant current iᵣ increases during the on-time of switch S4 (and switch S1) and increases even more to its positive peak amplitude during the simultaneous on-times tₒₙ of the switches S4 and S2 (= simultaneous off-times t_{off} of the switches S1 and S3) during which the terminals A, B of resonant tank 126 are short-circuited. During the off-time of switch S4 (and switch S1), the resonant current iᵣ decreases and decreases even more to its negative peak amplitude during the simultaneous off-times t_{off} of the switches S4 and S2 (= simultaneous on-times tₒₙ of the switches S1 and S3) during which the terminals A, B of resonant tank 126 are short-circuited. The rise time of the resonant current iᵣ, and therefore the transferred power, is dependent on the resonant tank characteristics, low voltage Vo 112 and the variable simultaneous on-time tₒₙ of the switches S1 and S3 or S2 and S4.

With regards to the primary side 110 of DC/DC converter 100, the control circuit 130 is configured to operate the first switch S6a and the second switch S5a of the (activated) rectifier circuit 114-a with duty cycle of 50% and a phase shift of 180°. This is shown in the third graph 230 of Fig. 2 which represents gating signals SR_h and SR_1 for transistors implementing switches S6a and S5a. The signals SR_h and SR_l are complementary, meaning when one is high (on), the other is low (off), and vice versa. This pattern corresponds to synchronous rectification, where the high-side and low-side switches S6a, S5a of rectifier circuit 114-a alternate in conducting to convert the DC input from primary port 112 to AC or vice versa. The 180° phase shift between SR_h and SR_l und thus the first switch S6a and the second switch S5a can be seen from their alternating pattern of respective on- and off-times, which may ensure that only one switch is conducting at any given time. This type of gating may be useful for efficient power conversion and to minimize losses, as it allows each switch S6a, S5a to operate at optimal times during the rectification process. In the illustrated example, gate signal G_T2 is equal to signal SR_h. The illustrated example, gating signals SR_h and SR_l are square waves having the same switching frequency (or switching period Ts) as gating signals G_T2 or G_T4.

The bottom graph 240 of Fig. 2 shows two current waveforms labeled i_T+ and i_T-. The current i_T+ represent the current through the first switch S6a. The current i_T- represent the current through the second switch S5a of the (activated) rectifier circuit 114-a. It can be seen that control circuit 130 is configured to turn first switch S6a off when i_T+ reaches zero or falls below zero. At the same time, the second switch S5a is turned on. The second switch S5a is turned off when i_T- reaches zero or falls below zero. At the same time, the first switch S6a is turned on. Thus, control circuit 130 may employ zero-current detectors for the rectifier circuits 114 and/or resonant tank circuit 126 to control the (switching frequency of) switches S6a, S5a and switches S1-S4 based on zero-current detection one the primary side 110. In the illustrated example, secondary side switches S2 and S3 are turned on and off synchronously to primary side switch S6a. Secondary side switches S1 and S4 are turned on and off phased-shifted (by tₒₙ) to primary side switch S5a.

The primary side (e.g., a center-tapped rectifier) 110 may apply either a positive or a negative voltage V₀ and is therefore operated at 50% duty cycle. The secondary side bridge halfs S1, S2 and S3, S4 are also operated with 50% duty and with the gate signal G_T2 equal to SR_h. The gate signal of G_T4 has a phase-shift w.r.t. G_T2 such that the short-circuit time tₒₙ is obtained. During this period, the voltage applied to the resonant tank 126 is zero which leads to an increase of the current in the resonant inductance Lr. The resonance is then used for the rest of the half of the switching period to allow the current i_T+ through primary side winding to decrease below zero such that SR_h MOSFET can be turned off without Lk of primary side inducing a large voltage spike across MOSFET (also results in soft switching of SR_l MOSFET). By varying switching frequency fs and the short-circuit time tₒₙ the power delivered from the low-voltage side 110 can be regulated.

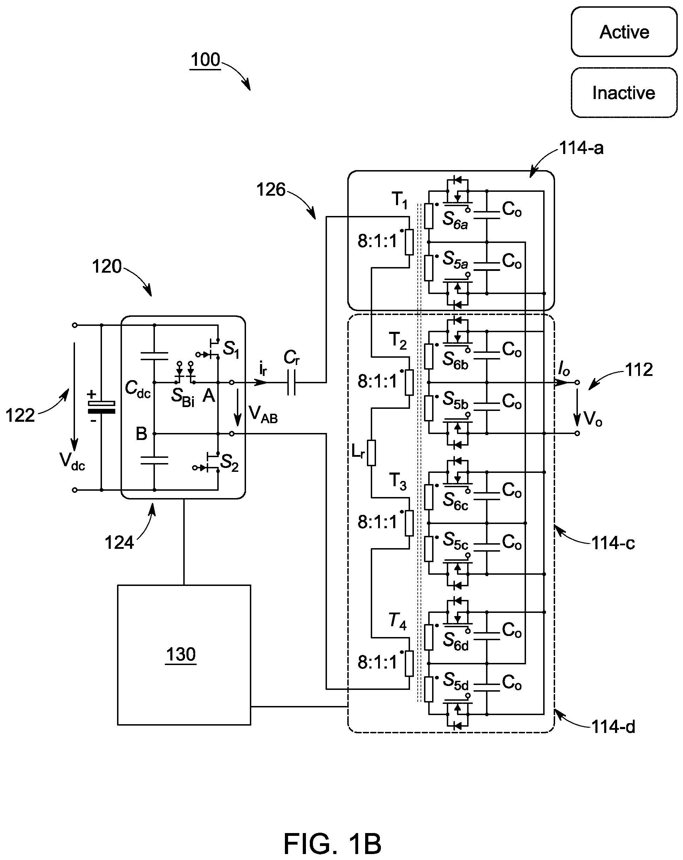

**Fig. 1B** shows a circuit diagram of a DC/DC converter circuit 100 according to another embodiment of the present disclosure, where the circuit 124 only uses a half-bridge with first switch S1 and second switch S2.

The bridge circuit 124 of Fig. 1B comprises a first series connection of switches S1 and S2 coupled in parallel to a second series connection of two capacitors. In the illustrated example, the secondary side bridge circuit 124 comprises first switch S1 (of first leg) coupled between first terminal T1 of the secondary port 122 and first terminal A of the resonant tank circuit 126. The bridge circuit 124 also comprises second switch S2 (of second leg) coupled between the first terminal A of the resonant tank circuit 126 and a second terminal T2 of the secondary port 122. The first switch S1 and the second switch S2 form a half-bridge circuit. A first capacitor is coupled between the first terminal T1 of the secondary port 122 and second terminal B of the resonant tank circuit 126. A second capacitor is coupled between the second terminal B of the resonant tank circuit 126 and the second terminal T2 of the secondary port 122. A bidirectional switch S_{Bi} is coupled between the second terminal B of the resonant tank circuit 126 and the first terminal A of the resonant tank circuit 126. Thus, in the illustrated example, the bridge circuit 124 is a half bridge circuit. For efficient power transfer from the primary side 110 to the secondary side 120, the control circuit 130 is configured to control the switches S1, S2, S_{Bi} of the bridge circuit 124 in a specific manner.

In accordance with the illustrated example, the control circuit 130 of Fig. 1B is configured to control the switches S1, S2, S_{Bi} of the bridge circuit 124 of Fig. 1B to cause the first terminal A and the second terminal B of the resonant tank circuit 126 being (periodically) short-circuited for a short-circuit time. This means, that on-times of switch S_{Bi} may correspond to the overlapping on-times of switches S2 and S4 as well as S1 and S3.

The control circuit 130 of Fig. 1B is configured to operate the switches S1 and S2 with switching frequency fs, 50% duty cycle, and a phase shift of 180°. This implies that switch S1 and switch S2 are being controlled so that one switch of a half is on when the other switch of the half is off, and vice versa. In the illustrated example, tₒₙ seconds before switch S1 is turned off, switch S_{Bi} may be turned on simultaneously to switch S1 to cause the first terminal A and the second terminal B of the resonant tank circuit 126 being short-circuited for the short-circuit time tₒₙ. Then, switch S1 and switch S_{Bi} are turned off together before switch S2 is turned on. Then, tₒₙ seconds before switch S2 is turned off, switch S_{Bi} may be turned on simultaneously to switch S2 to cause the first terminal A and the second terminal B of the resonant tank circuit 126 being short-circuited for the short-circuit time tₒₙ. Then, switch S2 and switch S_{Bi} are turned off together before switch S1 is turned on again, and so on. The skilled person will appreciate that the on-times of S_{Bi} could also be tuned differently.

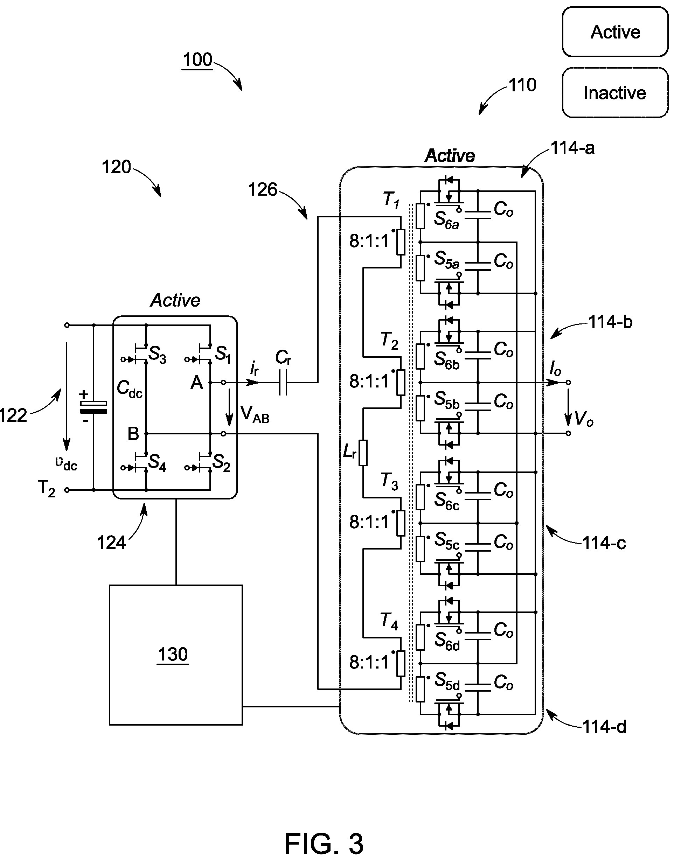

Depending on the power level to be transferred, the number of active rectifier circuits 114 can be adjusted. This offers a degree of freedom to optimize the efficiency in reverse power flow operation of DC/DC converter 100. **Fig. 3** illustrates the DC/DC converter 100 in a state where all four rectifier circuits 114-a to 114-d of the primary side 110 are activated to contribute to the power transfer from the primary side 110 to the secondary side 120. That is, Fig. 3 shows a system with a matrix transformer, where all synchronous rectifier circuits 114-a to 114-d may receive the same gate signals. That is, switches S6a to S6d may operate synchronously. The switches S5a to S5d may also operate synchronously but with a phase shift of 180° with respect to switches S6a to S6d. In the illustrated example, secondary side switches S2 and S3 operate synchronously to primary side switches S6a to 6d. Secondary side switches S1 and S4 operate phased-shifted (by tₒₙ) to primary side switches S5a to S5d.

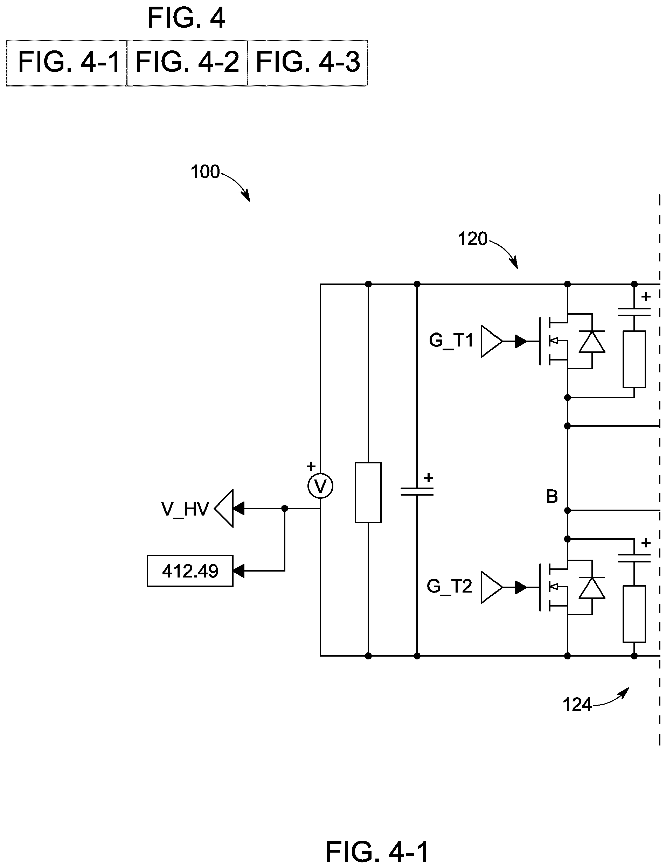

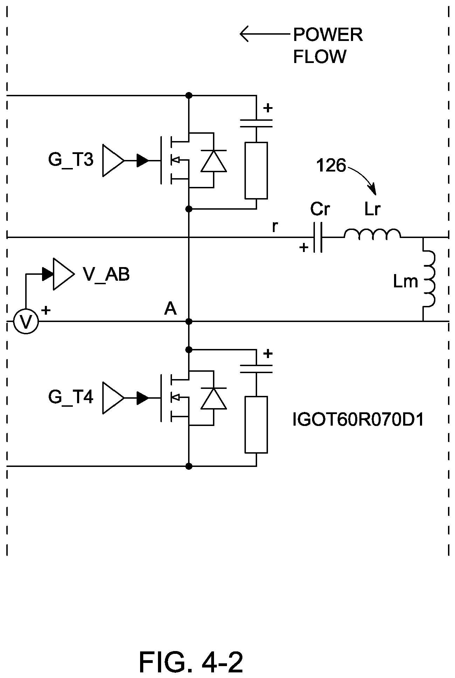

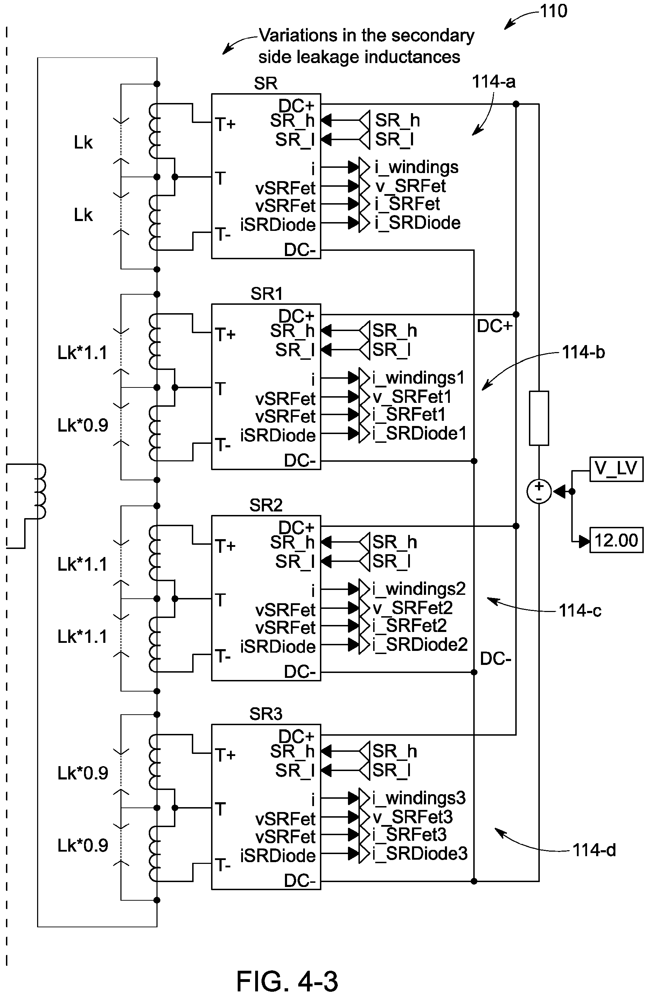

In the DC/DC converter 100 illustrated in **Fig. 4****,** it is assumed that leakage inductances Lk of the primary side 110 of the matrix transformer are slightly different. Leakage inductance is an inductance that may result from imperfect magnetic coupling of the windings in a transformer or inductor within an electrical circuit, such as DC/DC converter 100 with resonant tank 126 and rectifiers 114. Ideally, all the magnetic flux generated by the primary winding(s) would link to the secondary winding(s); however, in real transformers, some of the flux may not fully couple with the windings and may instead 'leak' through the surrounding space.

In Fig. 4 it is assumed that Lr = 4.4 µH, Cr = 36 nF, Lm = 48 µH, Lk = 10 nH ± 10%, fs = 450 kHz, and R_{HV} = 120 Ohm. That is, slight asymmetries have been introduced in the leakage inductances Lk.

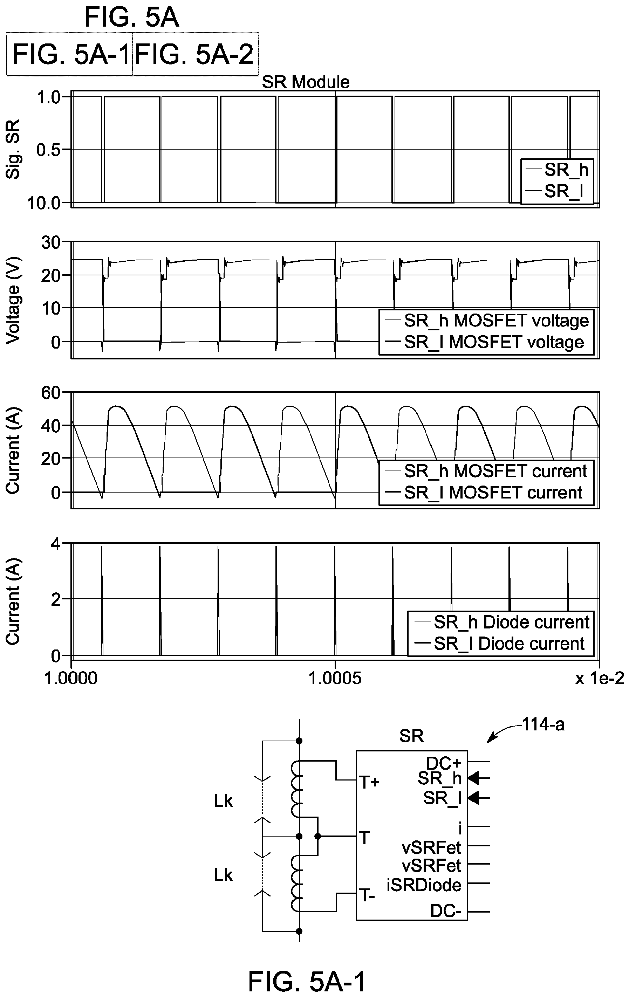

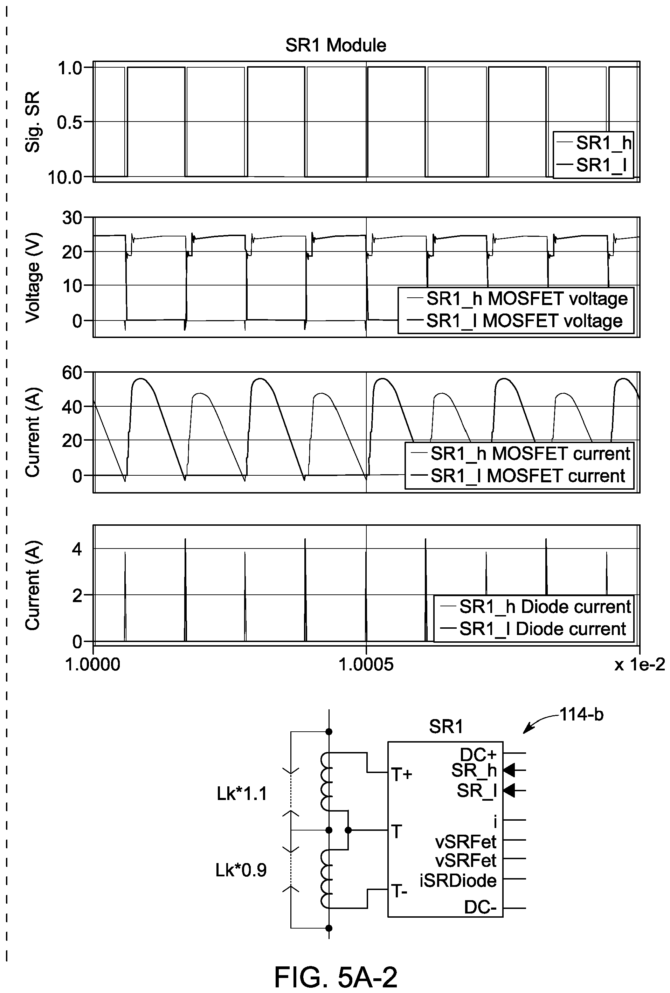

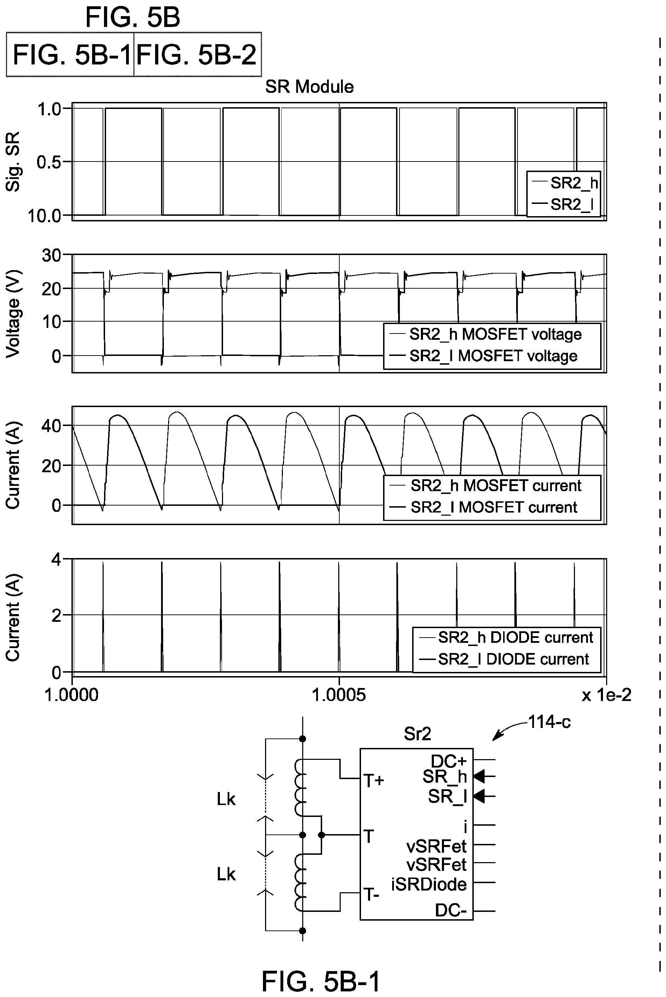

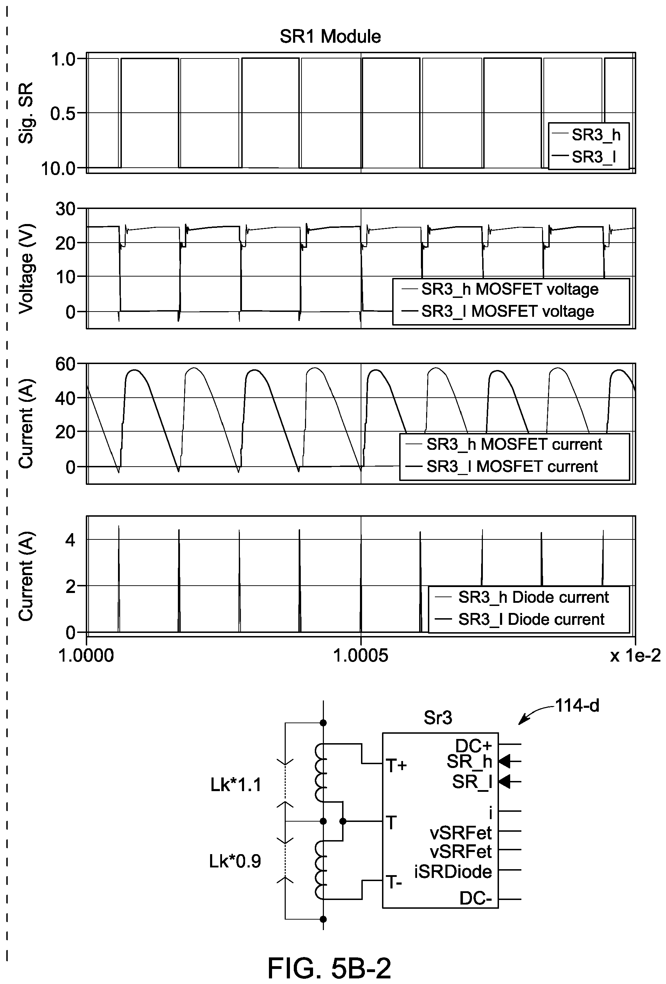

Simulation results depicted in **Fig. 5A** (for rectifiers 114-a, 114-b) and **Fig. 5A** (for rectifiers 114-c, 114-d) reveal that the leakage inductance variation may have only a slight impact on the current sharing. Even when the leakage inductances Lk deviate significantly from their nominal values (e.g., 10 nH), the currents are still distributed relatively symmetrically.

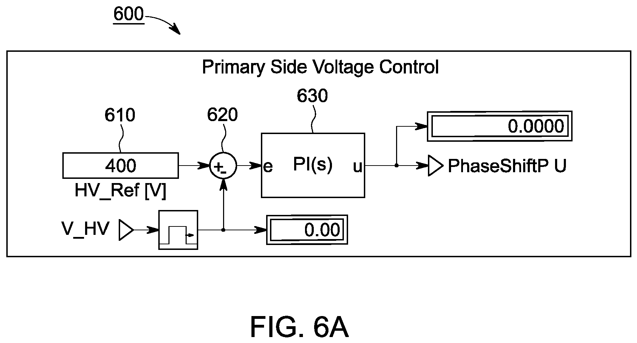

As mentioned above, control circuit 130 may be configured to control a (high) voltage vdc or V_{HV} between terminals T1 and T2 of secondary port 122 by adjusting the phase-shift between switches S2 and S4 (and thus the short-circuit time tₒₙ). **Fig. 6A** shows an example block diagram of a control loop 600 for the secondary side voltage.

Control loop 600 may be implement in control circuit 130. Block 610 represents a high-voltage reference value, set to 400 V in this example. This may be used as the target voltage that the control system aims to maintain between terminals T1 and T2 of secondary port 122. A summing block 620 may be used to calculate a difference between the reference voltage and an actual voltage (v_HV) measured between terminals T1 and T2 of secondary port 122. This difference may be used as an error signal, which is an input to a control algorithm. A Proportional-Integral (PI) controller block 630 may process the error signal and output a control signal to adjust the phase-shift between switches S2 and S4 (and thus the short-circuit time tₒₙ) minimizing the error over time. The illustrated example PI controller 600 may adjust the phase-shift between switches S2 and S4 (and thus the short-circuit time tₒₙ) to keep the actual voltage (v_HV) as close as possible to the reference voltage (HV_Ref).

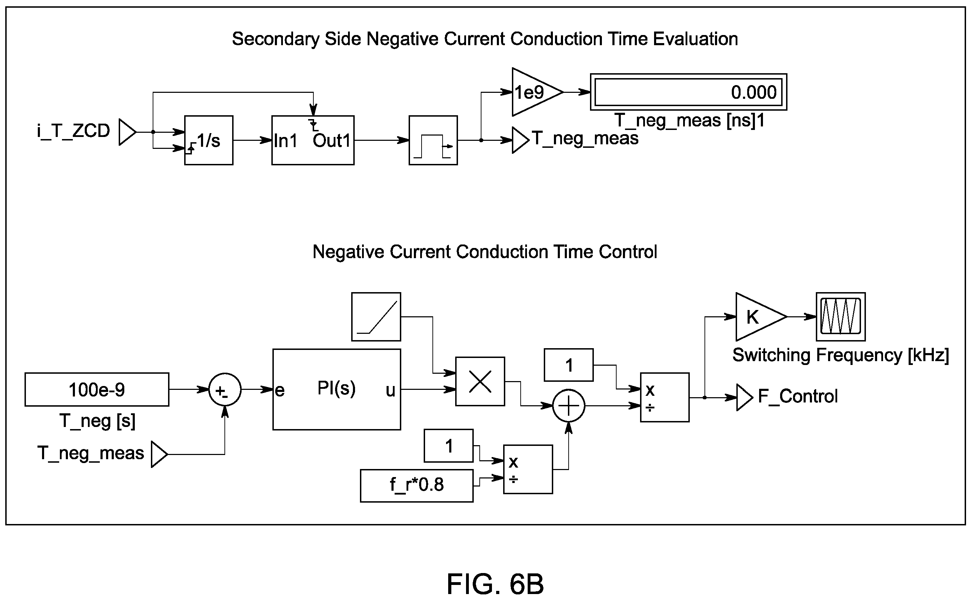

In order to guarantee ZVS on the primary side 110, the switching frequency fs may be adjusted to allow for enough negative current for ZVS. **Fig. 6B** shows two control circuits to adjust the switching frequency fs to achieve ZVS. In this implementation of the control loop, a zero-current-crossing detection (ZCD) signal (obtained by the upper control circuit) is used which is used for adjusting the switching frequency (with the lower control circuit).

Embodiments of the present disclosure proposes an operation of one or more synchronous rectifiers of a (center-)tapped matrix transformer in an active manner, such that reverse power flow may be achieved. An existing DC/DC converter system can be used to transfer power in both directions without additional hardware effort, thus enabling the concept for a wider range of applications. Without any topology modifications, a matrix transformer with synchronous rectifier switches may allow for bidirectional power flow. Either one or multiple rectifier modules 114 can be operated simultaneously, depending on the desired power level. Potential asymmetries in the transformer design are not an issue (especially if a common-current matrix transformer is employed). The control parameter, simultaneous on-time tₒₙ, can be controlled by means of a PI controller (depending on the desired bandwidth). The MOSFETs (switches) of the rectifier modules 114 may be turned-off, as soon as a necessary negative current for ZVS is achieved. During a start-up sequence (discharged HV capacitor), the converter 100 may be controlled as a quantum series resonant converter (QSRC) or DC-X converter, until the HV capacitor voltage reaches the unity gain level.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods of controlling a power transfer from the primary port to the secondary port of a DC/DC converter circuit when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several substeps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A circuit (100), comprising
a primary port (112) for providing a primary low voltage;
a secondary port (122) for providing a secondary high voltage, wherein the secondary high voltage is higher than the primary low voltage;
a primary side (110) comprising at least one rectifier circuit (114-a) coupled to the primary port (112), the rectifier circuit (114) comprising
a first primary winding (116-a,1) coupled to a first terminal of the primary port (112) via a first switch (S6a) and coupled to a second terminal of the primary port (112) via a tap (118-a),
a second primary winding (116-a,2) coupled to the first terminal of the primary port (112) via a second switch (S5a) and coupled to the second terminal of the primary port (112) via the tap (118-a) between the first and the second winding;
a secondary side (120) comprising a bridge circuit (124) of switches and a resonant tank circuit (126) coupled to the secondary port (122) via the bridge circuit (124), the resonant tank circuit (126) comprising a series connection of a capacitor and at least one secondary winding (128-a), wherein the primary windings (116-a,1; 116-a.2) and the secondary winding (128-a) form a transformer; and
a control circuit (130) configured to control switches of the primary side (110) and the secondary side (120), wherein the control circuit (130) is configured to
control the switches (S2; S4) of the bridge circuit (124) to cause a first and a second terminal (A, B) of the resonant tank circuit (126) being short-circuited for an adjustable time to control power flow from the primary port (112) to the secondary port (122).

2. The circuit (100) of claim 1, wherein the time for short-circuiting the first and a second terminal of the resonant tank circuit (126) is larger than zero and less than an on-time of the switches of the bridge circuit (124).

3. The circuit (100) of any one of the previous claims, wherein the control circuit (130) is configured to cause a phase shift different from 180° between a switch of a first leg of the bridge circuit (124) and a switch of a second leg of the bridge circuit (124).

4. The circuit (100) of claim 1 or 2, wherein the bridge circuit (124) comprises
a first switch (S1) coupled between a first terminal (T1) of the secondary port (122) and the first terminal (A) of the resonant tank circuit (126),
a second switch (S2) coupled between the first terminal (A) of the resonant tank circuit (126) and a second terminal (T2) of the secondary port (122);
a third switch (S3) coupled between the first terminal (T1) of the secondary port (122) and a second terminal (B) of the resonant tank circuit (126),
a fourth switch (S4) coupled between the second terminal (B) of the resonant tank circuit (126) and the second terminal (T2) of the secondary port (122), and wherein the control circuit (130) is configured to
control the switches of the bridge circuit (124) to cause respective on-times of the second and fourth switch (S2; S4) or the first and third switch (S1; S3) to overlap for the predefined time.

5. The circuit (100) of claim 4, wherein the control circuit (130) is configured to operate the second and fourth switch (S2; S4) or the first and third switch (S1; S3) of the bridge circuit (124) with a phase shift larger than 0° and less than 180° or larger than 180° and less than 360°

6. The circuit (100) of any one of claims 3 to 5, wherein the control circuit (130) is configured to vary the phase shift between a switch of a first leg of the bridge circuit (124) and a switch of a second leg of the bridge circuit (124).

7. The circuit (100) of any one of the previous claims, wherein the control circuit (130) is configured to operate the first switch (S6a) and the second switch (S5a) of the rectifier circuit (114-a) with a phase shift of 180°.

8. The circuit (100) of any one of the previous claims, wherein the rectifier circuit (114-a) comprises a first capacitor (C₀) coupled between the first switch (S6a) and the tap (118-a) and a second capacitor (C₀) coupled between the second switch (S5a) and the tap (118-a).

9. The circuit (100) of any one of the previous claims, wherein a number of turns of the secondary winding (128-a) is larger than a number of turns of each of the primary windings (116-a,1; 116-a.2).

10. The circuit (100) of any one of the previous claims, wherein a number of turns of the first primary winding (116-a,1) and a number of turns of the second primary winding (116-a,2) of the rectifier circuit (114-a) are equal.

11. The circuit (100) of any one of the previous claims, wherein the control circuit (130) is configured to vary a switching frequency of the switches of the primary and/or secondary side based on a power to be transferred between the primary and the secondary port.

12. The circuit (100) of any one of the previous claims, wherein the control circuit (130) comprises zero-current detectors for the at least one rectifier circuit (114) and/or the resonant tank circuit (126) to control the respective switches based on zero-current detection.

13. The circuit (100) of any one of the previous claims, wherein the primary voltage is lower than the secondary voltage.

14. The circuit (100) of any one of the previous claims, wherein
the primary side (110) comprises a plurality of center-tapped synchronous rectifier circuits (114),
the resonant tank circuit (126) of the secondary side (120) comprises a plurality of secondary windings (128) connected in series,
wherein each of the center-tapped synchronous rectifier circuits (114) and the corresponding secondary winding (128) form a respective transformer, and
the control circuit (130) is configured to control a number of center-tapped synchronous rectifier circuits (114) coupled to the primary port (112) based on an amount of power to be transferred between the primary port (112) and the secondary port (122).

15. A vehicle, comprising
a high voltage sub-system;
a low voltage sub-system; and
a circuit (100) of any one of the previous claims and coupled between the low voltage sub-system coupled to the primary port (112) and the high voltage sub-system coupled to the secondary port (122).

## Patentansprüche

1. Eine Schaltung (100), umfassend
einen primären Port (112) zum Bereitstellen einer primären Niederspannung;
einen sekundären Port (122) zum Bereitstellen einer sekundären Hochspannung, wobei die sekundäre Hochspannung höher als die primäre Niederspannung ist;
eine Primärseite (110), umfassend mindestens eine Gleichrichterschaltung (114-a), die mit dem primären Port (112) gekoppelt ist, wobei die Gleichrichterschaltung (114) umfasst:
eine erste Primärwicklung (116-a,1), die über einen ersten Schalter (S6a) mit einem ersten Anschluss des primären Ports (112) gekoppelt ist und über einen Abgriff (118-a) mit einem zweiten Anschluss des primären Ports (112) gekoppelt ist,
eine zweite Primärwicklung (116-a,2), die über einen zweiten Schalter (S5a) mit dem ersten Anschluss des primären Ports (112) gekoppelt ist und über den Abgriff (118-a) zwischen der ersten und der zweiten Wicklung mit dem zweiten Anschluss des primären Ports (112) gekoppelt ist;
eine Sekundärseite (120), umfassend eine Brückenschaltung (124) von Schaltern und eine Resonanztankschaltung (126), die über die Brückenschaltung (124) mit dem sekundären Port (122) gekoppelt ist, wobei die Resonanztankschaltung (126) eine Reihenschaltung aus einem Kondensator und mindestens einer Sekundärwicklung (128-a) umfasst, wobei die Primärwicklungen (116-a,1; 116-a.2) und die Sekundärwicklung (128-a) einen Transformator bilden; und
eine Steuerschaltung (130), die konfiguriert ist, um Schalter der Primärseite (110) und der Sekundärseite (120) zu steuern, wobei die Steuerschaltung (130) konfiguriert ist, um
die Schalter (S2; S4) der Brückenschaltung (124) zu steuern, um zu bewirken, dass ein erster und ein zweiter Anschluss (A, B) der Resonanztankschaltung (126) für eine einstellbare Zeit kurzgeschlossen werden, um den Leistungsfluss von dem primären Port (112) zu dem sekundären Port (122) zu steuern.

2. Die Schaltung (100) nach Anspruch 1, wobei die Zeit zum Kurzschließen des ersten und eines zweiten Anschlusses der Resonanztankschaltung (126) größer als null und kleiner als eine Einschaltzeit der Schalter der Brückenschaltung (124) ist.

3. Die Schaltung (100) nach einem der vorherigen Ansprüche, wobei die Steuerschaltung (130) konfiguriert ist, um eine Phasenverschiebung, die sich von 180° unterscheidet, zwischen einem Schalter eines ersten Zweigs der Brückenschaltung (124) und einem Schalter eines zweiten Zweigs der Brückenschaltung (124) zu bewirken.

4. Die Schaltung (100) nach Anspruch 1 oder 2, wobei die Brückenschaltung (124) umfasst
einen ersten Schalter (S1), der zwischen einem ersten Anschluss (T1) des sekundären Ports (122) und dem ersten Anschluss (A) der Resonanztankschaltung (126) gekoppelt ist,
einen zweiten Schalter (S2), der zwischen dem ersten Anschluss (A) der Resonanztankschaltung (126) und einem zweiten Anschluss (T2) des sekundären Ports (122) gekoppelt ist;
einen dritten Schalter (S3), der zwischen dem ersten Anschluss (T1) des sekundären Ports (122) und einem zweiten Anschluss (B) der Resonanztankschaltung (126) gekoppelt ist,
einen vierten Schalter (S4), der zwischen dem zweiten Anschluss (B) der Resonanztankschaltung (126) und dem zweiten Anschluss (T2) des sekundären Ports (122) gekoppelt ist, und
wobei die Steuerschaltung (130) konfiguriert ist, um
die Schalter der Brückenschaltung (124) zu steuern, um zu bewirken, dass sich die jeweiligen Einschaltzeiten des zweiten und vierten Schalters (S2; S4) oder des ersten und dritten Schalters (S1; S3) für die vordefinierte Zeit überlappen.

5. Die Schaltung (100) nach Anspruch 4, wobei die Steuerschaltung (130) konfiguriert ist, um den zweiten und vierten Schalter (S2; S4) oder den ersten und dritten Schalter (S1; S3) der Brückenschaltung (124) mit einer Phasenverschiebung größer als 0° und kleiner als 180° oder größer als 180° und kleiner als 360° zu betreiben.

6. Die Schaltung (100) nach einem der Ansprüche 3 bis 5, wobei die Steuerschaltung (130) konfiguriert ist, um die Phasenverschiebung zwischen einem Schalter eines ersten Zweigs der Brückenschaltung (124) und einem Schalter eines zweiten Zweigs der Brückenschaltung (124) zu variieren.

7. Die Schaltung (100) nach einem der vorherigen Ansprüche, wobei die Steuerschaltung (130) konfiguriert ist, um den ersten Schalter (S6a) und den zweiten Schalter (S5a) der Gleichrichterschaltung (114-a) mit einer Phasenverschiebung von 180° zu betreiben.

8. Die Schaltung (100) nach einem der vorherigen Ansprüche, wobei die Gleichrichterschaltung (114-a) einen ersten Kondensator (C₀), der zwischen den ersten Schalter (S6a) und den Abgriff (118-a) gekoppelt ist, und einen zweiten Kondensator (C₀), der zwischen den zweiten Schalter (S5a) und den Abgriff (118-a) gekoppelt ist, umfasst.

9. Die Schaltung (100) nach einem der vorherigen Ansprüche, wobei eine Anzahl von Windungen der Sekundärwicklung (128-a) größer ist als eine Anzahl von Windungen jeder der Primärwicklungen (116-a, 1; 116-a.2).

10. Die Schaltung (100) nach einem der vorherigen Ansprüche, wobei eine Anzahl von Windungen der ersten Primärwicklung (116-a, 1) und eine Anzahl von Windungen der zweiten Primärwicklung (116-a,2) der Gleichrichterschaltung (114-a) gleich sind.

11. Die Schaltung (100) nach einem der vorherigen Ansprüche, wobei die Steuerschaltung (130) konfiguriert ist, um eine Schaltfrequenz der Schalter der Primär- und/oder Sekundärseite basierend auf einer Leistung, die zwischen dem primären und dem sekundären Port übertragen werden soll, zu variieren.

12. Die Schaltung (100) nach einem der vorherigen Ansprüche, wobei die Steuerschaltung (130) Nullstromdetektoren für die mindestens eine Gleichrichterschaltung (114) und/oder die Resonanztankschaltung (126) umfasst, um die jeweiligen Schalter basierend auf einer Nullstromdetektion zu steuern.

13. Die Schaltung (100) nach einem der vorherigen Ansprüche, wobei die Primärspannung niedriger als die Sekundärspannung ist.

14. Die Schaltung (100) nach einem der vorherigen Ansprüche, wobei
die Primärseite (110) eine Mehrzahl von mittelabgegriffenen synchronen Gleichrichterschaltungen (114) umfasst,
die Resonanztankschaltung (126) der Sekundärseite (120) eine Mehrzahl von Sekundärwicklungen (128) umfasst, die in Reihe geschaltet sind,
wobei jede der mittelabgegriffenen synchronen Gleichrichterschaltungen (114) und die entsprechende Sekundärwicklung (128) einen jeweiligen Transformator bilden, und
die Steuerschaltung (130) konfiguriert ist, um eine Anzahl von mittelabgegriffenen synchronen Gleichrichterschaltungen (114), die mit dem primären Port (112) gekoppelt sind, basierend auf einer Leistungsmenge, die zwischen dem primären Port (112) und dem sekundären Port (122) übertragen werden soll, zu steuern.

15. Ein Fahrzeug, umfassend
ein Hochspannungsteilsystem;
ein Niederspannungsteilsystem; und
eine Schaltung (100) nach einem der vorherigen Ansprüche, die zwischen dem Niederspannungsteilsystem, das mit dem primären Port (112) gekoppelt ist, und dem Hochspannungsteilsystem, das mit dem sekundären Port (122) gekoppelt ist, gekoppelt ist.

## Revendications

1. Circuit (100), comprenant
un port primaire (112) pour fournir une basse tension primaire ;
un port secondaire (122) pour fournir une haute tension secondaire, dans lequel la haute tension secondaire est supérieure à la basse tension primaire ;
un côté primaire (110) comprenant au moins un circuit redresseur (114-a) couplé au port primaire (112), le circuit redresseur (114) comprenant
un premier enroulement primaire (116-a,1) couplé à une première borne du port primaire (112) via un premier commutateur (S6a) et couplé à une seconde borne du port primaire (112) via une prise (118-a),
un second enroulement primaire (116-a,2) couplé à la première borne du port primaire (112) via un second commutateur (S5a) et couplé à la seconde borne du port primaire (112) via la prise (118-a) entre le premier et le second enroulement ;
un côté secondaire (120) comprenant un circuit en pont (124) de commutateurs et un circuit bouchon résonant (126) couplé au port secondaire (122) via le circuit en pont (124), le circuit bouchon résonant (126) comprenant une connexion en série d'un condensateur et d'au moins un enroulement secondaire (128-a), dans lequel les enroulements primaires (116-a,1 ; 116-a.2) et l'enroulement secondaire (128-a) forment un transformateur ; et
un circuit de commande (130) configuré pour commander des commutateurs du côté primaire (110) et du côté secondaire (120), dans lequel le circuit de commande (130) est configuré pour
commander les commutateurs (S2 ; S4) du circuit en pont (124) pour amener une première et une seconde borne (A, B) du circuit bouchon résonant (126) à être court-circuitées pendant un temps ajustable pour commander un flux de puissance du port primaire (112) au port secondaire (122).

2. Circuit (100) selon la revendication 1, dans lequel le temps pour court-circuiter la première et une seconde borne du circuit bouchon résonant (126) est supérieur à zéro et inférieur à un temps de marche des commutateurs du circuit en pont (124).

3. Circuit (100) selon l'une des revendications précédentes, dans lequel le circuit de commande (130) est configuré pour provoquer un déphasage différent de 180° entre un commutateur d'une première branche du circuit en pont (124) et un commutateur d'une seconde branche du circuit en pont (124).

4. Circuit (100) selon la revendication 1 ou 2, dans lequel le circuit en pont (124) comprend
un premier commutateur (S1) couplé entre une première borne (T1) du port secondaire (122) et la première borne (A) du circuit bouchon résonant (126),
un deuxième commutateur (S2) couplé entre la première borne (A) du circuit bouchon résonant (126) et une seconde borne (T2) du port secondaire (122) ;
un troisième commutateur (S3) couplé entre la première borne (T1) du port secondaire (122) et une seconde borne (B) du circuit bouchon résonant (126),
un quatrième commutateur (S4) couplé entre la seconde borne (B) du circuit bouchon résonant (126) et la seconde borne (T2) du port secondaire (122), et
dans lequel le circuit de commande (130) est configuré pour
commander les commutateurs du circuit en pont (124) pour amener des temps de marche respectifs des deuxième et quatrième commutateurs (S2 ; S4) ou des premier et troisième commutateurs (S1 ; S3) à se chevaucher pendant le temps prédéfini.

5. Circuit (100) selon la revendication 4, dans lequel le circuit de commande (130) est configuré pour faire fonctionner les deuxième et quatrième commutateurs (S2 ; S4) ou les premier et troisième commutateurs (S1 ; S3) du circuit en pont (124) avec un déphasage supérieur à 0° et inférieur à 180° ou supérieur à 180° et inférieur à 360°.

6. Circuit (100) selon l'une des revendications 3 à 5, dans lequel le circuit de commande (130) est configuré pour faire varier le déphasage entre un commutateur d'une première branche du circuit en pont (124) et un commutateur d'une seconde branche du circuit en pont (124).

7. Circuit (100) selon l'une des revendications précédentes, dans lequel le circuit de commande (130) est configuré pour faire fonctionner le premier commutateur (S6a) et le deuxième commutateur (S5a) du circuit redresseur (114-a) avec un déphasage de 180°.

8. Circuit (100) selon l'une des revendications précédentes, dans lequel le circuit redresseur (114-a) comprend un premier condensateur (C₀) couplé entre le premier commutateur (S6a) et la prise (118-a) et un second condensateur (C₀) couplé entre le deuxième commutateur (S5a) et la prise (118-a).

9. Circuit (100) selon l'une des revendications précédentes, dans lequel un nombre de tours de l'enroulement secondaire (128-a) est supérieur à un nombre de tours de chacun des enroulements primaires (116-a,1 ; 116-a.2).

10. Circuit (100) selon l'une des revendications précédentes, dans lequel un nombre de tours du premier enroulement primaire (116-a,1) et un nombre de tours du second enroulement primaire (116-a,2) du circuit redresseur (114-a) sont égaux.

11. Circuit (100) selon l'une des revendications précédentes, dans lequel le circuit de commande (130) est configuré pour faire varier une fréquence de commutation des commutateurs du côté primaire et/ou secondaire sur la base d'une puissance à transférer entre le port primaire et le port secondaire.

12. Circuit (100) selon l'une des revendications précédentes, dans lequel le circuit de commande (130) comprend des détecteurs de courant nul pour l'au moins un circuit redresseur (114) et/ou le circuit bouchon résonant (126) pour commander les commutateurs respectifs sur la base d'une détection de courant nul.

13. Circuit (100) selon l'une des revendications précédentes, dans lequel la tension primaire est inférieure à la tension secondaire.

14. Circuit (100) selon l'une des revendications précédentes, dans lequel
le côté primaire (110) comprend une pluralité de circuits redresseurs synchrones à prise centrale (114),
le circuit bouchon résonant (126) du côté secondaire (120) comprend une pluralité d'enroulements secondaires (128) connectés en série,
dans lequel chacun des circuits redresseurs synchrones à prise centrale (114) et l'enroulement secondaire correspondant (128) forment un transformateur respectif, et
le circuit de commande (130) est configuré pour commander un nombre de circuits redresseurs synchrones à prise centrale (114) couplés au port primaire (112) sur la base d'une quantité de puissance à transférer entre le port primaire (112) et le port secondaire (122).

15. Véhicule, comprenant
un sous-système haute tension ;
un sous-système basse tension ; et
un circuit (100) selon l'une des revendications précédentes et couplé entre le sous-système basse tension couplé au port primaire (112) et le sous-système haute tension couplé au port secondaire (122).
